# EUROPEAN PATENT APPLICATION

(11) **EP 4 818 253 A1**
(43) Date of publication of application: **07.10.2026**
(21) Application number: 25382338.9
(22) Date of filing: 04.04.2025
(51) Int. Cl.: C08L 23/12

(54) **POLYMER COMPOSITION**

(71) Applicant: Repsol, S.A., 28045 Madrid (ES)
(72) Inventor: BARRIO CALLE, Juan Antonio, 28045 MADRID (ES); CABALLERO PÉREZ, María Joaquina, 28045 MADRID (ES); URDIALES SÁNCHEZ, Ana, 28045 MADRID (ES)
(74) Representative: ZBM Patents - Zea, Barlocci & Markvardsen

(57) **Abstract**

The present invention relates to a polymer composition comprising a recycled polypropylene (r-PP) composition which can be processed to obtain foamed parts; it is also described a process for the preparation of the composition, and a foam obtained from the polymer composition.

## Description

The present invention relates to the field of polymer chemistry. More particularly to a polymer composition comprising a recycled polypropylene (r-PP) composition, and to a process for the preparation of the composition. The invention also relates to a foam obtained from the polymer composition.

### Background art

In recent decades, the automotive industry has faced increasing pressure to reduce both vehicle weight and greenhouse gas emissions. Weight reduction is a key factor in improving fuel efficiency in internal combustion vehicles and maximizing range in electric vehicles. To achieve this goal, various strategies have been explored, including the use of advanced materials, lightweight alloys, composites, and structural foams.

Foams have gained particular relevance due to their combination of low weight, favorable mechanical properties, and impact absorption capabilities. These foams are used in various automotive applications, such as energy-absorbing structures, thermal and acoustic insulation, and structural reinforcements in interiors and bodywork.

However, the production of traditional polymeric materials and foams has a significant environmental impact, primarily due to their reliance on fossil resources and the generation of waste at the end of their life cycle. To mitigate these effects and reduce the carbon footprint of vehicles, the incorporation of recycled materials in the manufacturing of automotive foams has emerged as a sustainable alternative. The recycling of polymers and foams contributes to the circular economy by reducing the need for virgin raw materials, minimizing waste generation, and lowering CO₂ emissions associated with the production and disposal of these materials.

Despite these advancements, there are still technical challenges in implementing recycled foams in the automotive industry, such as maintaining their mechanical properties, ensuring compatibility with existing manufacturing processes, and meeting safety and performance regulations. Therefore, the development of new technologies and processes to enhance the quality and applicability of recycled foams is essential to further progress in reducing weight and emissions in the automotive sector.

In the field of polymer chemistry, it is well known that introducing a part of a recycled polymer into a polymer composition results in a drastically deterioration of the properties of the composition as compared to those compositions comprising only virgin polymers.

Therefore, the use of recycled polymers in applications requiring a high-performance level is actually very limited.

An increasing interest has been observed regarding the incorporation of recycled polymeric materials into compositions used for foam injection molding. Nevertheless, for example, the main challenges for foamed injection molded parts are compressive properties which are related mainly to the foam in the core of the part and multiaxial impact properties which are determined by the combination of the skin layer of the foam and the core. Achieving the demanding mechanical properties required by high industry standard is not an easy task when incorporating recycled polymeric materials.

Accordingly, there is a demand for foamed parts made of polypropylene that incorporate recycled polypropylene, showcasing enhanced multiaxial impact properties.

### Summary of the invention

Therefore, it is an object of the present invention to provide a polypropylene composition which can be processed to obtain foamed parts having excellent mechanical properties, particularly for the preparation of foamed parts for the automotive industry.

This object has been solved by providing a composition comprising a recycled polypropylene composition (r-PP), at least two different virgin heterophasic copolymers, at least one polyolefin-based elastomer, at least one microcrystalline talc and additives. The composition has mechanical properties such as multiaxial impact properties which meet the high standards required e.g. in the automotive industry. Therefore, the compositions according to the present invention are applicable for automotive parts, particularly in the preparation of interior parts such as door panels, pillars, tailgate, center console, etc.

Accordingly, in a first aspect, it is provided a composition comprising
(a) 15-35 wt% of a recycled polypropylene composition;
(b) 5-20 wt% of at least one first heterophasic propylene copolymer;
(c) 13-60 wt% of at least one second heterophasic propylene copolymer, different to the first heterophasic propylene copolymer;
(d) 8-15 wt% of at least one polyolefin based elastomer;
(e) 10-17 wt% of at least one intentionally added microcrystalline talc; and
(f) 2-4 wt% additives;

the percentages of (a) to (f) being referred to the total weight of the composition being the sum of components 100 wt%;
wherein
   - the recycled polypropylene composition (a) has the following properties:
      (a1) a melt flow rate MFR2, as determined by ISO1133 at 230°C with 2.16 kg load, in the range from 9-15 g/10 min; and
      (a2) a Charpy notched impact as determined by ISO 179/1eA (II) @23°C in the range from 20-60 KJ/m²;
   - the first heterophasic propylene copolymer (b) comprises a matrix phase and an elastomer phase dispersed therein and has the following properties:
      (b1) a melt flow rate MFR2, determined according to ISO 1133 at 230 °C and 2.16 kg, in the range from 15-35 g/10 min;
      (b2) a Charpy notched impact strength as measured by ISO 179/1eA (II) @23°C after 7 days of 25-60 KJ/m²; and
      (b3) flexural modulus as determined by ISO 178 at 23°C of 700-1100 MPa;
   - the second heterophasic propylene copolymer (c) comprises a matrix phase and an elastomer phase dispersed therein and has the following properties:
      (c1) a melt flow rate MFR2, determined according to ISO 1133 at 230 °C and 2.16 kg, in the range from 80-120 g/10 min; and
      (c2) a Charpy notched impact strength as measured by ISO 179/1eA (II) @23°C after 7 days of 3-7 KJ/m²; and
      (c3) flexural modulus as determined by ISO 178 at 23°C of 1200-1700 MPa;
   - the at least one polyolefin based elastomer (d) has the following properties:
      (d1) a melt flow rate MFR2, determined according to ISO 1133 at 230 °C and 2.16 kg, in the range from 4-8 g/10 min; and
      (d2) a density, determined according to ISO1183 in the range from 0.84-0.90 g/cm³;
   - the intentionally added microcrystalline talc (e) in the composition has the following property:
      (e1) a mean particle size (D50) of <1.7 microns as measured according to sedimentation analysis, Stokes' law (ISO 13317).

In a second aspect of the present invention, it is provided a process for preparing the composition according to the invention, comprising the steps of:
i) providing a recycled polypropylene composition (a), at least one first (b) and second heterophasic propylene (c) copolymers, at least one polyolefin based elastomer (d), at least one intentionally added microcrystalline talc (e) and additives (f) as defined in claim 1 and in the required amounts; and
ii) melt-blending the components (a)-(f).

In a third aspect, it is provided a foamed article, preferably a foamed injection-molded article, comprising the composition according to the invention.

In a fourth aspect, it is provided a process for preparing a foamed article comprising:
i) providing a composition as defined herein; and
ii) injection foam molding the composition together with a chemical foaming agent.

In a fifth aspect, it is provided an injection-molded foam obtainable by injection foam molding the composition as defined herein.

A sixth aspect of the present invention relates to the use of the composition of the invention for automotive applications.

### Detailed description of the invention

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

As used herein, the indefinite articles "a" and "an" are synonymous with "at least one" or "one or more". Unless indicated otherwise, definite articles used herein, such as "the" also include the plural of the noun.

For purposes of the present invention, any ranges given include both the lower and the upper end-points of the range. Ranges given, such as concentrations and the like, should be considered approximate, unless specifically stated.

### Mechanical properties of the composition

According to some embodiments of the first aspect of the invention, the composition has the following properties:
(i) a melt flow rate MFR2, determined according to ISO 1133 at 230 °C and 2.16 kg, in the range from 10-60 g/10 min; preferably from 10-55 g/10 min; more preferably from 20-50 g/10 min;
(ii) a Charpy notched impact strength as measured by ISO179/1eA (II) @23°C after 7 days of 20-60 KJ/m²; preferably of 25-55 KJ/m²; more preferably of 30-50 KJ/m²; and
(iii) a flexural modulus, determined according to ISO 178 at 23°C, in the range from 1200-1800 MPa; preferably from 1250-1750 MPa; more preferably from 1300-1700 MPa.

In accordance with some embodiments, the composition further has one or more of the following properties:
(iv) a density, determined according to ISO1183 in the range from 0.80-1.20 g/cm³; preferably from 0.85-1.15 g/cm³; more preferably from 0.9-1.10 g/cm³; and
(v) a heat distortion temperature, determined according to ISO 75-2 in the range from 60-100 °C; preferably from 65-95 °C; more preferably from 70-90 °C.

In some particular embodiments, the composition has
(i) a melt flow rate MFR2, determined according to ISO 1133 at 230 °C and 2.16 kg, in the range from 15-55 g/10 min; and
(ii) a Charpy notched impact strength as measured by ISO179/1eA (II) @23°C after 7 days of 25-55 KJ/m²;
(iii) a flexural modulus, determined according to ISO 178 at 23°C, in the range from 1250-1750 MPa;
(iv) a density, determined according to ISO1183 in the range from 0.85-1.15 g/cm³; and
(v) a heat distortion temperature, determined according to ISO 75-2 in the range from 65-95 °C.

### Concentration of components in the composition

In accordance with some embodiments of the present invention, the composition comprises
(a) 15-35 wt% of a recycled polypropylene composition, preferably from 17-33 wt%, more preferably from 20-30 wt%;
(b) 5-20 wt% of at least one first heterophasic propylene copolymer, preferably from 6-19 wt%, more preferably from 7-18 wt%;
(c) 13-60 wt% of at least one second heterophasic propylene copolymer, different to the first heterophasic propylene copolymer, preferably from 25-45 wt%, more preferably from 30-40 wt%;
(d) 8-15 wt% of at least one polyolefin based elastomer, preferably from 9-14 wt%, more preferably from 10-13 wt%;
(e) 10-17 wt% of at least one intentionally added microcrystalline talc, preferably from 11-16 wt%, more preferably from 10-15 wt%; and
(f) 2-4 wt% additives , preferably from 2.5-3.5 wt%, more preferably from 2.7-3.2 wt%;
being the components (a) to (f) as defined above; the percentages of (a) to (f) being referred to the total weight of the composition, being the sum of components 100 wt%.

In accordance with some particular embodiments, the composition of the present invention comprises
(a) 20-30 wt% of a recycled polypropylene composition;
(b) 7-18 wt% of at least one first heterophasic propylene copolymer;
(c) 30-40 wt% of at least one second heterophasic propylene copolymer, different to the first heterophasic propylene copolymer;
(d) 10-13 wt% of at least one polyolefin based elastomer;
(e) 10-15 wt% of at least one intentionally added microcrystalline talc; and
(f) 2.5-3.5 wt% additives
the percentages of (a) to (f) being referred to the total weight of the polypropylene composition being the sum of components 100 wt%.

In the recycled polypropylene composition, the ashes content is estimated to be the same as the talc content for the recycled polypropylene composition.

Therefore, the "total content of talc" in the composition of interest result from the sum of the talc content (i.e. ashes content) in the recycled polypropylene composition and the amount of microcrystalline talc which is intentionally added, as a different component from the talc included in the recycled polypropylene composition.

The "intentionally added microcrystalline talc" according to the present invention, is a microcrystalline talc which exhibits (e1) property, and optionally also exhibits at least one of the (e2) to (e4) properties, as defined in the present invention.

### Reclycled polypropylene composition

For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer.

The term "virgin" denotes the newly produced materials and/or objects prior to first use and not being recycled. In case that the origin of the polymer is not explicitly mentioned the polymer is a "virgin" polymer.

The recycled polypropylene composition can be either recycled post-consumer polypropylene or post-industrial polypropylene, such as for example from the automobile industry, or alternatively, a combination of both.

In some embodiments, the recycled polypropylene composition may be a polypropylene (PP) rich material of recycled plastic material that comprises significantly more polypropylene than polyethylene. Recycled waste streams, which are high in polypropylene can be obtained for example from the automobile industry, particularly as some automobile parts such as, for example, bumpers are sources of fairly pure polypropylene material in a recycling stream or by enhanced sorting. PP rich recycled may also be obtained by means of plastic recycling processes known in the art.

In accordance with some embodiments, the recycled polypropylene composition is present in an amount based on the total weight of the polypropylene composition from15-35 wt%, preferably from 17-33 wt%, more preferably from 20-30 wt%, still more preferably from 25-29 wt%.

In accordance with some embodiments, the recycled polypropylene composition has the following properties:
(a1) a melt flow rate MFR₂, as determined by ISO1133 at 230°C with 2.16 kg load, in the range from 9-15 g/10 min, preferably from 10-14 g/10 min, more preferably from 11-13 g/10 min;
(a2) a Charpy notched impact (23°C) as determined by ISO 179/1eA (II) @23°C in the range from 20-60 KJ/m², preferably from 30-50 KJ/m², more preferably from 35-45 KJ/m².

In accordance with some embodiments, the recycled polypropylene composition has the following properties:
(a1) a melt flow rate MFR2, as determined by ISO 1133 at 230°C with 2.16 kg load, in the range from 9-15 g/10 min, preferably from 10-14 g/10 min, more preferably from 11-13 g/10 min;
(a2) a Charpy notched impact (23°C) as determined by ISO 179/1eA (II) @23°C in the range from 20-60 KJ/m², preferably from 30-50 KJ/m², more preferably from 35-45 KJ/m²; and
(a3) a flexural modulus, determined according to ISO 178 at 23°C, in the range from 1000-1300 MPa, preferably from 1050-1250 MPa, more preferably from 1100-1200 MPa.

In accordance with some embodiments, the recycled polypropylene composition further has one or more of the following properties:
(a4) a density, determined according to ISO1183 in the range from 0.90-1.10 g/cm³, preferably from 0.90-1.05 g/cm³, more preferably from 0.90-1.02 g/cm³;
(a5) an ashes content as determined by ASTM D5630 in the range from 6-13 wt%, preferably from 6.5-12.5 wt%, more preferably from 7-12 wt%.

### Heterophasic propylene copolymers

The term "copolymer" as used herein refers to both polymers with two different recurring units and polymers with more than two different recurring units in the chain, such as terpolymers.

The heterophasic propylene copolymers consist of a propylene-based matrix, wherein the propylene-based matrix consists of a propylene homopolymer and/or a propylene copolymer consisting of at least 80 wt% of propylene monomer units, preferably at least 82 wt% of propylene monomer units, more preferably at least 84 wt% of propylene monomer units, and at most 20 wt% of ethylene and/or a-olefin monomer units, preferably at most 18 wt% of ethylene and/or a-olefin monomer units, more preferably at most 16 wt% of ethylene and/or a-olefin monomer units, based on the total weight of the propylene-based matrix; and a dispersed ethylene-α-olefin copolymer, wherein the sum of the total amount of propylene-based matrix and total amount of the dispersed ethylene-α-olefin copolymer in the heterophasic propylene copolymer is 100 wt%.

The composition of the present invention comprises at least two different heterophasic propylene copolymers.

The first heterophasic propylene copolymer (b) being present in an amount based on the total weight of the polypropylene composition 5-20 wt%, preferably from 6-19 wt%, more preferably from 7-18 wt%.

The first heterophasic propylene copolymer (b) has the following properties:
(b1) a melt flow rate MFR2, determined according to ISO 1133 at 230 °C and 2.16 kg, in the range from 15-35 g/10 min, preferably from 17-33 g/10 min, more preferably from 20-30 g/10 min;
(b2) a Charpy notched impact strength as measured by ISO179/1eA (II) @23°C after 7 days of 25-60 KJ/m², preferably from 30-50 KJ/m², more preferably from 35-45 KJ/m²;
(b3) flexural modulus as determined by ISO 178 at 23°C of 700-1100 MPa, preferably from 800-1000 MPa, more preferably from 850-950 MPa.

In some embodiments, the first heterophasic propylene copolymer (b) further has one or more of the following properties:
(b4) a xylene cold soluble (XCS) content measured according to ASTM D 5492-94 from 25-35 wt%, preferably from 26-34 wt%, more preferably from 27-33 wt%;
(b5) a heat distortion temperature, determined according to ISO 75-2 in the range from 50-70 °C, preferably from 55-65 °C, more preferably from 57-63 °C; and
(b6) a density, determined according to ISO1183 in the range from 0.80-0.95 g/cm³, preferably from 0.84-0.92 g/cm³, more preferably from 0.86-0.90 g/cm³.

The second heterophasic propylene copolymer (c) being in an amount based on the total weight of the polypropylene composition 13-60 wt%, preferably from 25-45 wt%, more preferably from 30-40 wt%.

In some embodiments, second heterophasic propylene copolymer (c) has the following properties:
(c1) a melt flow rate MFR2, determined according to ISO 1133 at 230 °C and 2.16 kg, in the range from 80-120 g/10 min , preferably from 90-110 g/10 min, more preferably from 95-105 g/10 min;
(c2) a Charpy notched impact strength as measured by ISO 179/1eA (II) @23°C after 7 days of 3-7 KJ/m², preferably from 3.5-6.5 KJ/m², more preferably from 4-6 KJ/m²;
(c3) flexural modulus as determined by ISO 178 at 23°C of 1200-1700 MPa, preferably from 1300-1600 MPa, more preferably from 1350-1550 MPa.

In some embodiments, the second heterophasic propylene copolymer (c) further has one or more of the following properties:
(c4) a xylene cold soluble (XCS) content measured according to ASTM D 5492-94 from 12-20 wt%, preferably from 12.5-19.5 wt%, more preferably from 13-19 wt%;
(c5) a heat distortion temperature, determined according to ISO 75-2 in the range from 75-95 °C, preferably from 80-90 °C, more preferably from 82-88 °C; and
(c6) a density, determined according to ISO1183 in the range from 0.80-0.95 g/cm³, preferably from 0.84-0.92 g/cm³, more preferably from 0.86-0.90 g/cm³.

Heterophasic copolymers which are suitable for use in the current invention are commercially available for example under the trademark REPSOL ISPLEN or IMPACTO available from REPSOL.

### Polyolefin based elastomer (POE)

The composition of the present invention comprises at least one polyolefin-based elastomer (POE).

Suitable POE may be ethylene/propylene copolymers with different C2/C3 ratio (C2/C3 or C3/C2 elastomers), ethylene/butene copolymers (C2/C4 elastomers), ethylene/octene copolymers (C2/C8 elastomers), grafted ethylene elastomers (such as MAH grafted ethylene elastomers) or C2/C3 and C2/C4 block copolymers, in particular an ethylene based 1-octene elastomer.

In some embodiments, the POE is preferably selected from a group consisting of ethylene-1-butene copolymer, ethylene-1-hexene copolymer, ethylene-1-octene copolymer and mixtures thereof, more preferably, the elastomer is an ethylene-1-octene copolymer.

Preferably, the amount of ethylene incorporated into the polyolefin-based elastomer is at least 45 wt%. More preferably, the amount of ethylene incorporated into the polyolefin-based elastomer is at least 48 wt%, for example at least 50 wt%. The amount of ethylene incorporated into the polyolefin-based elastomer may typically be at most 95 wt%, for example at most 85 wt%, for example at most 75 wt%, for example at most 65 wt%, for example at most 60 wt%, for example at most 58 wt%. In some embodiments, the amount of ethylene incorporated into the polyolefin-based elastomer ranges from 45 wt% to 95 wt%, preferably from 48 wt% to 85 wt%, more preferably from 50 wt% to 58 wt%.

In some embodiments, the POE is present in the composition of the present invention in an amount based on the total weight of the composition from 8-15 wt%, preferably from 9-14 wt%, more preferably from 10-13 wt%.

In some embodiments, the POE has
(d1) a melt flow rate MFR2, determined according to ISO 1133 at 230 °C and 2.16 kg, in the range from 4-8 g/10 min, preferably from 5-7 g/10 min, more preferably from 5.5-6.5 g/10 min; and
(d2) a density, determined according to ISO1183 in the range from 0.84-0.90 g/cm³, preferably from 0.85-0.89 g/cm³, more preferably from 0.86-0.88 g/cm³.

The polyolefin-based elastomers may be prepared using methods known in the art, for example by using a single site catalyst or heterogeneous multi-sited Ziegler-Natta catalysts.

The polyolefin-based elastomers which are suitable for use in the current invention are commercially available for example under the trademark ENGAGE^{®} polymers, a line of metallocene catalyzed elastomers available from Dow Chemical Company (USA), or under the trademark TAFMER^{®} available from MITSUI Chemicals Group (Japan).

### Intentionally added microcrystalline talc

As mentioned above, in the recycled polypropylene composition, the ashes content is estimated to be the same as the talc content for the recycled polypropylene composition. Therefore, the "total content of talc" in the composition of interest result from the sum of the talc content (i.e. ashes content) in the recycled polypropylene composition and the amount of microcrystalline talc which is intentionally added, as a different component from the talc included in the recycled polypropylene composition.

The composition of the present invention is prepared by intentionally adding a microcrystalline talc. In the context of the present invention, the "intentionally added microcrystalline talc" is a microcrystalline talc which exhibits (e1) property, and optionally also exhibits at least one of the (e2) to (e4) properties, as defined in the present invention.

The total content of intentionally added microcrystalline talc present in the composition of the present invention is in an amount from 10-17 wt%, preferably from 10-16 wt%, more preferably from 10-15 wt%, still more preferably from 12-14 wt%, based on the total weight of the composition.

Therefore, the total content of talc in the composition, which result from the sum of the talc content in the recyclate polypropylene composition and the amount of microcrystalline talc which is intentionally added, is in the range from 15-35 wt%, preferably from 18-30 wt%, more preferably from 20-28 wt%, based on the total weight of the composition.

In accordance with some embodiments, the intentionally added microcrystalline talc has the following property:
(e1) a mean particle size (D50) of <1.7 microns as measured according to sedimentation analysis, Stokes' law (ISO 13317), preferably of <1.6 microns, more preferably of <1.5 microns.

In some embodiments, the intentionally added microcrystalline talc further has one or more of the following properties:
(e2) a mean particle size (D50) of <4.7 microns as measured by laser diffraction, Mie Theory (ISO 13320), preferably of <4.6 microns, more preferably of <4.5 microns;
(e3) specific surface area (BET), determined according to ISO 9277, of from 8-17 m²/g, preferably from 9-16 m²/g, more preferably from 10-15 m²/g;
(e4) a tapped bulk density determined according to ISO 787 of from 0.82-0.95 g/cm³, preferably from 0.84-0.95 g/cm³, more preferably from 0.84-0.93 g/cm³.

In some embodiments, the intentionally added microcrystalline talc (e) has the following properties
(e1) a mean particle size (D50) of <1.7 microns as measured according to sedimentation analysis, Stokes' law (ISO 13317), preferably of <1.6 microns, more preferably of <1.5 microns; and
(e2) a mean particle size (D50) of <4.7 microns as measured by laser diffraction, Mie Theory (ISO 13320), preferably of <4.6 microns, more preferably of <4.5 microns.

In some embodiments, the intentionally added microcrystalline talc (e) has the following properties
(e1) a mean particle size (D50) of <1.7 microns as measured according to sedimentation analysis, Stokes' law (ISO 13317), preferably of <1.6 microns, more preferably of <1.5 microns;
(e2) a mean particle size (D50) of <4.7 microns as measured by laser diffraction, Mie Theory (ISO 13320), preferably of <4.6 microns, more preferably of <4.5 microns; and
(e4) a tapped bulk density determined according to ISO 787 of from 0.82-0.95 g/cm³, preferably from 0.84-0.95 g/cm³, more preferably from 0.84-0.93 g/cm³.

Microcrystalline talc suitable for use in the current invention are commercially available for example under the trademark JETFINE^{®}, a line of ultrafine talc available from IMERYS (France).

### Additives

The composition according to the present invention may further contain additives, for instance nucleating agents and clarifiers, stabilizers, release agents, plasticizers, anti-oxidants, lubricants, anti-statics, cross linking agents, scratch resistance agents, high performance fillers, pigments and/or colorants, flame retardants, blowing agents, acid scavengers, recycling additives, anti-microbials, antifogging additives, slip additives, anti-blocking additives, polymer processing aids and the like. Such additives are well known in the art.

In accordance with some embodiments, the amount of the additives in the composition is from 2-4 wt%, preferably from 2.5-4.5 wt%, more preferably from 2.8-4.2 wt%.

### Injection moulded article

In another aspect the present invention relates to an injection-moulded article comprising the composition as described above or below.

Thereby, preferably all aspects of the composition and its components as described above or below apply for the injection-moulded article.

The injection-moulded article preferably is an automotive article.

The injection-moulded article preferably comprises the composition in an amount of from 90 to 100 wt%, more preferably from 95 to 100 wt%, based on the total weight of the injection-moulded article.

The injection-moulded article can comprise additional components such as additional polymeric components, fillers or additives in an amount of 0 to 10 wt%, more preferably from 0 to 5 wt%, based on the total weight of the injection-moulded article.

### Foamed article

As is mentioned above, an aspect of the present invention provides a foamed article, preferably a foamed injection-molded article, comprising the composition according to the invention.

Thereby, preferably all aspects of the composition and its components as described above or below apply for the foamed article.

The foamed article preferably is a foamed injection-molded article, more preferably an automotive article.

The foamed injection molded article is preferably produced by core-back injection molding as described above.

The foamed article preferably comprises the composition in an amount of from 90.0 to 99.9 wt%, more preferably from 95.0 to 99.5 wt%, based on the total weight of the injection-molded article.

The foamed article is preferably produced by foaming the composition in the presence of a foaming agent. The term "foaming agent" refers to an agent, which is capable of producing a cellular structure in a composition during foaming.

The foaming agent can be a physical foaming agent, typically a gas such as carbon dioxide, nitrogen or other inert gases.

It is, however, preferred that the foaming agent is a chemical foaming agent.

Thereby, the composition is preferably blended, more preferably melt-blended with the foaming agent, preferably the chemical foaming agent.

When brought into the form of the article, the chemical foaming agent is preferably activated. Upon activation the chemical foaming agent releases a gas, such as nitrogen or carbon dioxide, which formed bubbles within the melt of the article. Upon solidification of the gas bubbles solidify as cells in the article, thereby forming the foamed article.

When using core-back injection molding technology for producing the foamed article, the chemical foaming agent is activated by opening the mold by a predetermined degree, such as from 1 mm to 5 mm, preferably from 2 mm to 3 mm.

The chemical foaming agent is preferably introduced into the composition in an amount of from 0.1 to 10.0 wt%, more preferably from 0.2 to 5.0 wt%, based on the combined weight of the composition and the chemical foaming agent.

The chemical foaming agent preferably is an endothermic chemical foaming agent. It is preferred that the chemical foaming agent is an organic chemical foaming agent, such as a polycarboxylic acid, like citric acid, fumaric acid, tartric acid, sodium hydrogen citrate, monosodium citrate or combinations thereof.

The chemical foaming agent preferably is activated at a rather high temperature of from 200 to 250°C, more preferably from 210 to 230°C.

Suitable chemical foaming agents are commercially available, such as Hydrocerol ITP818 and Hydrocerol 825, both commercially available from Clariant.

In one embodiment, the foamed article comprises the composition foamed in the presence of a foaming agent, preferably a chemical foaming agent.

In one embodiment, the foamed article of the invention has the following properties:
i) an energy at peak force as measured according to ISO6603-2 at 23°C from 6.5 to 15J; preferably from 7 to 13J, more preferably from 8 to 12J;
ii) a puncture energy absorbed as measured according to ISO6603-2 at 23°C from 10 to 18J; preferably from 12 to 16 J; more preferably from 13-15J; and
iii) exhibit a yield ductile behavior (YD) according to ISO 6603-2 at -20°C for more than 80 % of the samples; preferably for more than 90%, preferably for more than 95%.

The composition is preferably produced by melt blending components (a) to (f) as defined above, in a compounding device such as an extruder. Suitable extruders are e.g. twin-screw extruders. The compounding conditions are usually as known in the art.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### Examples

### Test Methods

The following definitions of terms and determination methods apply for the above general description of the invention as well as to the below examples unless otherwise defined.

Ashes content was determined according to ASTM D5630. Flexural modulus was determined according to ISO 178 at 23 °C standard. Impact strength was determined as Charpy notched Impact Strength according to ISO 179-1/1eA at +23 °C. Puncture energy was determined according to ISO 6603-2, 4.4m/s, 3 mm, 23°C. Xylene Cold Solubles (XCS) was determined at 25°C according to ASTM D5492. Melt flow rate MFR2 was determined according to ISO1133 at 230°C with 2.16 kg load. Density was determined according to ISO 1183. Mean particle size (D50) was determined according to sedimentation analysis, Stokes' law (ISO 13317). Mean particle size (D50) was determined by laser diffraction, Mie Theory (ISO 13320). Tapped bulk density was determined according to ISO 787. Specific Surface Area (BET) was determined according to ISO 9277.

Energy at peak force (23°C) and puncture energy (23°C) was determined in instrumented falling weight at 23°C according to ISO 6603-2. The ISO 6603-2 curve type evaluation is a common method to characterize the force/ deflection data obtained by puncture test experiments. It provides four typical types of curve progression that can usually be observed during data evaluation. In general, these range from ductile to brittle and focus on information like yielding, crack initiation and crack propagation. Obtained data has been divided into these four categories, which are summarized below:
Break types:
YD : Yielding followed by deep drawing (Ductile) - most preferred
YS : Yielding followed by stable cracking (Semi-ductile) - preferred
YU : Yielding followed by unstable cracking (Semi-brittle) - least preferred
NY : No yielding (Brittle) - not preferred

The following materials were used (table 1):

| **Ingredient** | **Commercial name** | **Available from** |
|---|---|---|
| Talc (Talc1) | Jetfine T1CA | IMERYS |
| Talc (Talc2) | Steamic T1CA | IMERYS |
| Talc (Talc3) | Jetfine T3CA | IMERYS |
| Recycled polypropylene (r-PP1) | PP ELV | ACTECO |
| Recycled polypropylene (r-PP2) | PP EDA | ACTECO |
| Recycled polypropylene (r-PP3) | PP PERCHAS | ACTECO |
| Polyolefin elastomer (POE1) | Engage 8200 | DOW |
| Polyolefin elastomer (POE2) | Engage HM7487 | DOW |
| Polyolefin elastomer (POE3) | Engage 8407 | DOW |
| Antioxidant (OA1) | Irganox 1010 | BASF |
| Antioxidant (OA2) | Irganox PS 802 | BASF |
| Antioxidant (OA3) | Hostavin N30 | BASF |
| Antioxidant (OA4) | CHIMASSORB 944 | BASF |
| Antioxidant (MB2) | Irganox B-225 | BASF |
| Antioxidant (AO5) | Irganox 1076 | BASF |
| Additive (AR1) | Multibase MB50-001 | DUPONT |

HPC1 is a heterophasic propylene copolymer comprising 86 wt% propylene and 14 wt% ethylene; HPC2 is a heterophasic propylene copolymer comprising 86 wt% propylene and 14 wt% ethylene; HPC3 is a heterophasic propylene copolymer comprising 92 wt% propylene and 8 wt% ethylene; and HPC4 is a heterophasic propylene copolymer comprising 92 wt% propylene and 8 wt% ethylene.

Properties of the different components are summed up in table 2:

| | Melt Flow Rate MFR2 (g/10min) | Charpy notched impact (kJ/m²) | Flexural Modulus (MPa) | Density (g/cm3) | Heat Distorsión Temp. 0.45MPa (°C) | Mean Particle Size (D50) Sediment.( µm) | Mean Particle Size (D50) Laser Diffraction (µm) | Specific Surface Area (BET) (m²/g) | Tapped Bulk Density (g/cm³) |
|---|---|---|---|---|---|---|---|---|---|
| Talc1 | | | | | | 1.3 | 4.2 | 12.6 | 0.9 |
| Talc2 | | | | | | 1.8 | 6.0 | 8.0 | 1.00 |
| Talc3 | | | | | | 1.3 | 4.4 | 14.5 | 0.9 |
| r-PP1 | (11.0-15.0) | >20 | | | | | | | |
| r-PP2 | (12.0-18.0) | >4 | | | | | | | |
| r-PP3 | (9.0-17.0) | | | | | | | | |
| POE1 | 5 | | | 0.870 | | | | | |
| POE2 | <0.50 | | | 0.860 | | | | | |
| POE3 | 30 | | | 0.870 | | | | | |
| HPC1 | 20 | 60 | 1000 | 0.905 | 72 | | | | |
| HPC2 | 20 | 60 | 800 | 0.905 | 61 | | | | |
| HPC3 | 100 | 5.5 | 1450 | 0.905 | | | | | |
| HPC4 | 45 | 8 | 1400 | 0.905 | 100 | | | | |

### Example 1. Preparation of the compositions

The compositions were prepared following a standard method well known in the art.

The process was divided into three parts: blending, extrusion process and packaging. After that, quality control was done.

The objective of the blending is to prepare and provide raw materials for the feeders.

Heterophasic propylenes and mineral fillers (talc) were fed directly to different feeders. The additives were previously weight taking into account formulation and after that, they were blended using intensive mixers that are called Mixaco. Then they were fed directly from Mixaco to additives extruder feeders.

The objective of the extrusion process is to blend all the components using an extruder in order to have a homogenous product. Twin-screw extruders are most commonly used for the production of PP compounds. The main components are:
- Feeder system: Feeders are controlled by a computer on which the product's formulation is included. The computer makes gravimetric control of the feeders. There are alarms in case of detecting mistakes between formulation and feeding.
- Extruder: it is a twin extruder, and screws have a special profile that ensures good blending. The extruder can be divided in:
   o Main and secondary feeders
   o Side feeder: for feeding mineral fillers.
   ∘ Vaccum: its main function is to eliminate volatiles.
      ∘ Screen filter: its function is to retain contaminants.
   ∘ Extrusion head: is the processing tool that shapes the extrudate. The extrusion head is fixed to the end part of the plasticizing system of the extruder.
- Extrusion colling bath: the extrudate is directly cooled in a fixed water bath. Then it is dried and finally it is cut.
- Extruder cutting system: it converts extrudate into pellets. It is a rotor with blades that spins at a controlled speed. Pellet size depends on speed cutting system. Pellets fall down into a sieve where error pieces are retained.

### Sieved pellets were moved by pneumatic transport to packaging area

In the preparation of foamed articles, core-back technology was used. In this process, the chemical foaming agent was fed directly together with the material or formulation to be foamed. During the plasticization of the material in the injection unit, the chemical-type foaming agent decomposes, releasing gas that dissolves in the polymer with the help of the shear forces generated during the process. The polymer / gas solution generated in the injection unit was injected into the cavity of a mold until it was completely filled. Once the cavity was filled, the mobile part of the mold was moved, increasing the volume of the cavity, allowing the cells that will make up the foam to nucleate and grow.

**Table 3 sums up the properties of inventive and comparative compositions:**

| | | **EX.1** | **Ex.2** | **Ex.3** | **EX.4** | **EX.5** | **EX.6** | **EX.7** | **EX.8** |
|---|---|---|---|---|---|---|---|---|---|
| Density | g/cm3 | 0,9738 | 1 | 0,9835 | 0,9994 | 0,9811 | 0,9941 | 0,9882 | 1,0007 |
| IF(230°C/2.16 Kg) | g/10 min | 22,4 | 17,3 | 18,6 | 26,2 | 18,1 | 17,6 | 17,3 | 17,9 |
| MEF | Mpa | 1392 | 1308 | 1319 | 1641 | 1149 | 1282 | 1223 | 1341 |
| Ashes | % | 12 | 15,24 | 13,27 | 15,01 | 12,91 | 14,87 | 12,99 | 15,89 |
| HDT 0,45 Mpa | °C | 90 | 85 | 87 | 102 | 79 | 87 | 84 | 92 |
| Impac.Charpy 23°C (c.e.) | KJ/m2 | 27,8*P | 29,4*P | 26,8*P | 10,2*P | 44,1 | 37,5 | 36,4 | 34,7 |
| Talc (Talc1) | wt% | | | | | | | | |
| Talc (Talc2) | wt% | 12 | 12 | 12 | 12 | 13 | 13 | 13 | 15 |
| Talc (Talc3) | wt% | | | | | | | | |
| Recycled polypropylene (r-PP1) | wt% | | 15 | | | 15 | 20 | 30 | 20 |
| Recycled polypropylene (r-PP2) | wt% | | | 15 | | | | | |
| Recycled polypropylene (r-PP3) | wt% | | | | 15 | | | | |
| Polyolefin elastomer (POE1) | wt% | 12 | 12 | 12 | 12 | 12 | 12 | 12 | 12 |
| Polyolefin elastomer (POE2) | wt% | | | | | | | | |
| Polyolefin elastomer (POE3) | wt% | | | | | | | | |
| Heterophasic propylene copolymer (HPC1) | wt% | 27 | 27 | 27 | 27 | 23,95 | 18,95 | 11,95 | 19,95 |
| Heterophasic propylene copolymer (HPC2) | wt% | | | | | | | | |
| Heterophasic propylene copolymer (HPC3) | wt% | | | | | | | | |
| Heterophasic propylene copolymer (HPC4) | wt% | 46,35 | 31,35 | 31,35 | 31,35 | 33 | 33 | 30 | 30 |
| OA1 | wt% | 0,05 | 0,05 | 0,05 | 0,05 | 0,2 | 0,2 | 0,2 | 0,2 |
| AO5 | wt% | 0,2 | 0,2 | 0,2 | 0,2 | | | | |
| OA4 | wt% | 0,25 | 0,25 | 0,25 | 0,25 | | | | |
| MB2 | wt% | 0,15 | 0,15 | 0,15 | 0,15 | 0,4 | 0,4 | 0,4 | 0,4 |
| AR1 | wt% | 2 | 2 | 2 | 2 | 2 | 2 | 2 | 2 |
| OA2 | wt% | | | | | 0,2 | 0,2 | 0,2 | 0,2 |
| OA3 | wt% | | | | | 0,25 | 0,25 | 0,25 | 0,25 |

| | | | | | | | | | |
|---|---|---|---|---|---|---|---|---|---|
| *P means "Partial Break" | | | | | | | | | |

**Table 3 (cont.)**

| | | **EX.9** | **Ex.10** | **Ex.11** | **EX.12** | **EX.13** | **EX.14** | **EX.15** | **EX.16** |
|---|---|---|---|---|---|---|---|---|---|
| Density | g/cm3 | 0,9948 | 0,9964 | 1,0125 | 1,0129 | 1,04 | 1,0114 | 0,9995 | 1,0073 |
| IF(230°C/2.16 Kg) | g/10 min | 22,3 | 23,7 | 23,2 | 21 | 17,9 | 21,5 | 21,9 | 21,3 |
| MEF | Mpa | 1266 | 1260 | 1444 | 1301 | 1394 | 1401 | 1409 | 1446 |
| Ashes | % | | 14,94 | 17,09 | 16,69 | 19,14 | 17 | 15,4 | 16,5 |
| HDT 0,45 Mpa | °C | 86 | 81 | 89 | 84 | 84 | 87 | 84 | 86 |
| Impac.Charpy 23°C (c.e.) | KJ/m2 | 38,7 | 30,54 | 39,15 | 23,2 | 21,3 | 42,4 | 42 | 40 |
| Talc (Talc1) | wt% | | | | | | | | |
| Talc (Talc2) | wt% | 15 | 15 | | 15 | 15 | | | |
| Talc (Talc3) | wt% | | | 15 | | | 13 | 13 | 13 |
| Recycled polypropylene (r-PP1) | wt% | 20 | 20 | 20 | 30 | 40 | 20 | 25 | 30 |
| Recycled polypropylene (r-PP2) | wt% | | | | | | | | |
| Recycled polypropylene (r-PP3) | wt% | | | | | | | | |
| Polyolefin elastomer (POE1) | wt% | 12 | 12 | 12 | 12 | 12 | 12 | 12 | 12 |
| Polyolefin elastomer (POE2) | wt% | | | | | | | | |
| Polyolefin elastomer (POE3) | wt% | | | | | | | | |
| Heterophasic propylene copolymer (HPC1) | wt% | 19,95 | 19,95 | 19,95 | 14,95 | 10,95 | 19,95 | 14,95 | 9,95 |
| Heterophasic propylene copolymer (HPC2) | wt% | | | | | | | | |
| Heterophasic propylene copolymer (HPC3) | wt% | 30 | 30 | 30 | 25 | 19 | 32 | 32 | 32 |
| Heterophasic propylene copolymer (HPC4) | wt% | | | | | | | | |
| OA1 | wt% | 0,2 | 0,2 | 0,2 | 0,2 | 0,2 | 0,2 | 0,2 | 0,2 |
| AO5 | wt% | | | | | | | | |
| OA4 | wt% | | | | | | | | |
| MB2 | wt% | 0,4 | 0,4 | 0,4 | 0,4 | 0,4 | 0,4 | 0,4 | 0,4 |
| AR1 | wt% | 2 | 2 | 2 | 2 | 2 | 2 | 2 | 2 |
| OA2 | wt% | 0,2 | 0,2 | 0,2 | 0,2 | 0,2 | 0,2 | 0,2 | 0,2 |
| OA3 | wt% | 0,25 | 0,25 | 0,25 | 0,25 | 0,25 | 0,25 | 0,25 | 0,25 |

**Table 3 (cont.)**

| | | **EX.17** | **Ex.18** | **Ex.19** | **EX.20** | **EX.21** | **EX.22** | **EX.23** | **EX.24** |
|---|---|---|---|---|---|---|---|---|---|
| Density | g/cm3 | 1,0039 | 1,0104 | 1,0122 | 1,0033 | 1,008 | 0,969 | 0,9744 | 1,01 |
| IF(230°C/2.16 Kg) | g/10 min | 20 | 19,9 | 24,2 | 23,8 | 25,6 | 23,5 | 29,4 | 27,5 |
| MEF | Mpa | 1544 | 1553 | 1661 | 1463 | 1499 | 1419 | 1486 | 1564 |
| Ashes | % | 16,16 | 16,9 | 16,7 | 15,4 | 15,9 | 11,1 | 11,9 | 12,65 |
| HDT 0,45 Mpa | °C | 89 | 89 | 88 | 89 | 90 | N.A | 89 | 94,6 |
| Impac.Charpy 23°C (c.e.) | KJ/m2 | 11,9 | 15,5 | 9,92 | 43 | 41 | 49 | 9 | 34 |
| Talc (Talc1) | wt% | | | | | | | | 13 |
| Talc (Talc2) | wt% | | | | | | | | |
| Talc (Talc3) | wt% | 2 | 2 | 2 | 13 | 13 | 12 | 12 | |
| Recycled polypropylene (r-PP1) | wt% | 13 | 13 | 13 | 30 | 28 | | | 28 |
| Recycled polypropylene (r-PP2) | wt% | | | | | | | | |
| Recycled polypropylene (r-PP3) | wt% | | | | | | | | |
| Polyolefin elastomer (POE1) | wt% | | | | 12 | 12 | 12 | | 12 |
| Polyolefin elastomer (POE2) | wt% | 15 | 14 | 10 | | | | 12 | |
| Polyolefin elastomer (POE3) | wt% | | | 3 | | | | | |
| Heterophasic propylene copolymer (HPC1) | wt% | | | | 9,95 | 6,95 | 26,95 | 26,95 | 6,95 |
| Heterophasic propylene copolymer (HPC2) | wt% | | | | | | | | |
| Heterophasic propylene copolymer (HPC3) | wt% | 48,95 | 44,95 | 40,95 | 32 | 37 | | 46 | 37 |
| Heterophasic propylene copolymer (HPC4) | wt% | | | | | | 46 | | |
| OA1 | wt% | 0,2 | 0,2 | 0,2 | 0,2 | 0,2 | 0,2 | 0,2 | 0,2 |
| AO5 | wt% | | | | | | | | |
| OA4 | wt% | | | | | | | | |
| MB2 | wt% | 0,4 | 0,4 | 0,4 | 0,4 | 0,4 | 0,4 | 0,4 | 0,4 |
| AR1 | wt% | 2 | 2 | 2 | 2 | 2 | 2 | 2 | 2 |
| OA2 | wt% | 0,2 | 0,2 | 0,2 | 0,2 | 0,2 | 0,2 | 0,2 | 0,2 |
| OA3 | wt% | 0,25 | 0,25 | 0,25 | 0,25 | 0,25 | 0,25 | 0,25 | 0,25 |

**Table 3 (cont.)**

| | | **EX.25** | **EX.26** |
|---|---|---|---|
| Density | g/cm3 | 0,993 | 0,994 |
| IF(230°C/2.16 Kg) | g/10 min | 22,4 | 23,7 |
| MEF | Mpa | 1638 | 1705 |
| Ashes | % | 14,09 | 14 |
| HDT 0,45 Mpa | °C | 96 | 93 |
| Impac.Charpy 23°C (c.e.) | KJ/m2 | 33 | 16 |
| Talc (Talc1) | wt% | 14 | 14 |
| Talc (Talc2) | wt% | | |
| Talc (Talc3) | wt% | | |
| Recycled polypropylene (r-PP1) | wt% | | |
| Recycled polypropylene (r-PP2) | wt% | | |
| Recycled polypropylene (r-PP3) | wt% | | |
| Polyolefin elastomer (POE1) | wt% | 12 | 10 |
| Polyolefin elastomer (POE2) | wt% | | |
| Polyolefin elastomer (POE3) | wt% | | |
| Heterophasic propylene copolymer (HPC1) | wt% | 24,95 | 26,95 |
| Heterophasic propylene copolymer (HPC2) | wt% | | |
| Heterophasic propylene copolymer (HPC3) | wt% | | |
| Heterophasic propylene copolymer (HPC4) | wt% | 46 | 46 |
| OA1 | wt% | 0,2 | 0,2 |
| AO5 | wt% | | |
| OA4 | wt% | | |
| MB2 | wt% | 0,4 | 0,4 |
| AR1 | wt% | 2 | 2 |
| OA2 | wt% | 0,2 | 0,2 |
| OA3 | wt% | 0,25 | 0,25 |

EX.1 to EX.8 were prepared using Talc2 and HPC4, therefore, these examples are not according to the present invention. EX.9, EX.10, EX.12 and EX.13 were prepared using Talc2; therefore, these examples are not according to the present invention. EX.22, EX.25 and EX.25 were prepared using HPC4, therefore, these examples are not according to the present invention.

In the foaming process, the composition of Ex. 24 was foamed with 1.5% hydrocerol 818 or 2% hydrocerol 825 as chemical foaming agent. Hydrocerol 818 and Hydrocerol 825 are both commercially available from AVIENT.

**Table 4 resume the properties of the injection-molded articles:**

| | **Ex.24 + 1.5% Hydrocerol 818** | **EX.24 + 2% Hydrocerol 825** |
|---|---|---|
| IF (230°C/2.16 kg) (g/10min) | | |
| MEF (MPa) | 1413 | 1350 |
| MET (MPa) | 1413 | 1405 |
| Stress at break (MPa) | 14.2 | 14 |
| Strain at break (%) | 40.6 | 51.8 |
| Stress at Yield (MPa) | 18.1 | 18 |
| Strain at Yield (%) | 3.8 | 3.9 |
| HDT 0.45 MPa (°C) | 90 | 84 |
| Impact Charpy 23°C KJ/m2 | 24.7 | 39.6 |
| Shrinkage, Flow direction | 8.2 | 8.2 |
| Shrinkage, Cross direction | 10.4 | 10.2 |
| Shrinkage, Medium | 9.3 | 9.2 |
| Energy at Peak Force, Em (J) | 18.8 | 18.15 |
| Puncture Energy, Ep (J) | 29.6 | 32.4 |
| Energy at total breaking, Et (J) | 37.1 | 39.5 |
| Profil Rupture behavior at 23°C | YD | YD |

According to the results obtained, the compositions of the invention exemplified by inventive examples have improved balance of stiffness, impact properties and flowability. The inventive injection-molded articles prepared from the compositions of the invention have surprisingly high impact properties, particularly multi-axial instrumented impact values in comparation with the comparative examples. The inventive examples exhibited YD yield behavior at 23°C for 100% of the samples, which is beneficial for automotive applications.

### References cited in the application

ASTM D5630
ISO 179/1eA (II) @23°C
ISO 6603-2
ASTM D5492
ISO1133
ISO 1183
ISO 13317
ISO 13320
ISO 787
ISO 9277.
ISO 6603

## Claims

1. A composition comprising
(a) 15-35 wt% of a recycled polypropylene composition;
(b) 5-20 wt% of at least one first heterophasic propylene copolymer;
(c) 13-60 wt% of at least one second heterophasic propylene copolymer, different to the first heterophasic propylene copolymer;
(d) 8-15 wt% of at least one polyolefin based elastomer;
(e) 10-17 wt% of at least one intentionally added microcrystalline talc; and
(f) 2-4 wt% additives
the percentages of (a) to (f) being referred to the total weight of the composition being the sum of components 100 wt%;
wherein
- the recycled polypropylene composition (a) has the following properties:
(a1) a melt flow rate MFR2, as determined by ISO1133 at 230°C with 2.16 kg load, in the range from 9-15 g/10 min; and
(a2) a Charpy notched impact (23°C) as determined by ISO 179/1eA (II) @23°C n the range from 20-60 KJ/m²;
- the first heterophasic propylene copolymer (b) comprises a matrix phase and an elastomer phase dispersed therein and has the following properties:
(b1) a melt flow rate MFR2, determined according to ISO 1133 at 230 °C and 2.16 kg, in the range from 15-35 g/10 min;
(b2) a Charpy notched impact strength as measured by ISO179/1eA (II) @23°C after 7 days of 25-60 KJ/m²; and
(b3) flexural modulus as determined by ISO 178 at 23°C of 700-1100 MPa;
- the second heterophasic propylene copolymer (c) comprises a matrix phase and an elastomer phase dispersed therein and has the following properties:
(c1) a melt flow rate MFR2, determined according to ISO 1133 at 230 °C and 2.16 kg, in the range from 80-120 g/10 min;
(c2) a Charpy notched impact strength as measured by ISO 179/1eA (II) @23°C after 7 days of 3-7 KJ/m²; and
(c3) flexural modulus as determined by ISO 178 at 23°C of 1200-1700 MPa;
- the at least one polyolefin based elastomer (d) has the following properties:
(d1) a melt flow rate MFR2, determined according to ISO 1133 at 230 °C and 2.16 kg, in the range from 4-8 g/10 min; and
(d2) a density, determined according to ISO1183 in the range from 0.84-0.90 g/cm3;
- the intentionally added microcrystalline talc (e) in the composition has the following property:
(e1) a mean particle size (D50) of <1.7 microns as measured according to sedimentation analysis, Stokes' law (ISO 13317).

2. The compositoin according to claim 1, wherein the recycled polypropylene composition (a) has at least one of
(a1) a melt flow rate MFR2, as determined by ISO1133 at 230°C with 2.16 kg load, in the range from 10-14 g/10 min; and
(a2) a Charpy notched impact (23°C) as determined by ISO 179/1eA (II) @23°C in the range from 30-50 KJ/m².

3. The composition according to any of claims 1-2, wherein the first heterophasic propylene copolymer (b) has at least one of
(b1) a melt flow rate MFR2, determined according to ISO 1133 at 230 °C and 2.16 kg, in the range from 17-33 g/10 min;
(b2) a Charpy notched impact strength as measured by ISO179/1eA (II) @23°C after 7 days in the range from 30-50 KJ/m²; and
(b3) flexural modulus as determined by ISO 178 at 23°C of 800-1000 MPa.

4. The compositon according to any of claims 1-3, wherein the second heterophasic propylene copolymer (c) comprises a matrix phase and an elastomer phase dispersed therein and has
(c1) a melt flow rate MFR2, determined according to ISO 1133 at 230 °C and 2.16 kg, in the range from 90-110g/10 min; and
(c2) a Charpy notched impact strength as measured by ISO 179/1eA (II) @23°C after 7 days in the range from 3.5-6.5KJ/m²; and
(c3) flexural modulus as determined by ISO 178 at 23°C of 1300-1600 MPa.

5. The composition according to any of claims 1-4, wherein the at least one polyolefin based elastomer (d) has the following properties:
(d1) a melt flow rate MFR2, determined according to ISO 1133 at 230 °C and 2.16 kg, in the range from 5-7 g/10 min; and
(d2) a density, determined according to ISO1183 in the range from 0.85-0.89 g/cm³.

6. The composition according to any of claims 1-5, wherein the intentionally added microcrystalline talc (e) in the composition has
(e2) a mean particle size (D50) of <4.7 microns as measured by laser diffraction, Mie Theory (ISO 13320-1);
(e3) specific surface area (BET), determined according to ISO9277, of from 8-17 m²/g;
(e4) a tapped bulk density determined according to ISO 787 of from 0.82-0.95 g/cm³.

7. The composition according to any of claims 1-6, wherein the composition has the following properties:
(i) a melt flow rate MFR2, determined according to ISO 1133 at 230 °C and 2.16 kg, in the range from 10-60 g/10 min; and
(ii) a Charpy notched impact strength as measured by ISO179/1eA (II) @23°C after 7 days of 20-60 KJ/m²; and
(iii) a flexural modulus, determined according to ISO 178 at 23 °C, in the range from 1200--1800 MPa.

8. The composition according to any of claims 1-7, wherein the composition has one or more of the following properties:
(iv) a density, determined according to ISO1183 in the range from 0.80-1.20 g/cm³;
(v) a heat distortion temperature, determined according to ISO 75-2 in the range from 60-100 °C.

9. The composition according to any of claims 1-8, wherein the composition has the following properties:
(i) a melt flow rate MFR2, determined according to ISO 1133 at 230 °C and 2.16 kg, in the range from 15-55 g/10 min; and
(ii) a Charpy notched impact strength as measured by ISO179/1eA (II) @23°C after 7 days of 25-55 KJ/m²;
(iii) a flexural modulus, determined according to ISO 178 at 23 °C, in the range from 1250-1750 MPa;
(iv) a density, determined according to ISO1183 in the range from 0.85-1.15 g/cm³; and
(v) a heat distortion temperature, determined according to ISO 75-2 in the range from 65-95 °C.

10. A process for preparing the composition according to any one of the claims 1-9 comprising the steps of:
i) providing a recycled polypropylene composition (a), at least one first (b) and second heterophasic propylene (c) copolymers, at least one polyolefin based elastomer (d), at least one intentionally added microcrystalline talc (e) and additives (f) as defined in claim 1 and in the required amounts;
wherein components (a), (b), (c), (d), (e) and (f) are as defined in claim 1; and
ii) melt-blending the components (a)-(f).

11. A foamed article, preferably a foamed injection-molded article, comprising the composition according to any of the claims 1-9.

12. The foamed article according to claim 11, wherein the composition is foamed in the presence of a foaming agent, preferably a chemical foaming agent.

13. The foamed article according to claim 12, having
(i) an energy at peak force as measured according to ISO6603-2 at 23°C from 6.5 to 15J
(ii) a puncture energy absorbed as measured according to ISO6603-2 at 23°C from 10to 18J
(iii)exhibit a yield ductile behavior (YD) according to ISO 6603-2 at 23°C for more than 80 % of the samples.

14. A process for preparing a foamed article comprising:
i) providing a composition according to any of the claims 1-9 and
ii) injection foam molding the composition together with a chemical foaming agent.

15. Use of the composition according to any of the claims 1-9 for automotive applications.
